# EUROPÄISCHE PATENTANMELDUNG

(11) **EP 2 915 854 A1**
(43) Veröffentlichungstag der Anmeldung: **09.09.2015**
(21) Anmeldenummer: 15156638.7
(22) Anmeldetag: 26.02.2015
(51) Int. Cl.: C09D 5/00, C09D 7/00, C09K 3/18

(54) **Anti - Eis - Schicht für Verdichterschaufeln**

(30) Priorität: 06.03.2014 DE 102014204075
(71) Anmelder: MTU Aero Engines AG, 80995 München (DE)
(72) Erfinder: Lopez Lavernia, Natividad, 80995 München (DE); Niegl, Max, 81247 München (DE); Heusing, Melanie, 31737 Rinteln (DE)

(57) **Zusammenfassung**

Die vorliegende Erfindung betrifft eine Zusammensetzung zur Herstellung einer Beschichtung für Bauteile einer Strömungsmaschine mit Anti - Eis - Eigenschaften, wobei die Zusammensetzung umfasst:
ein Bindemittel, welches mindestens einen siliziumorganischen Bestandteil aufweist, keramische Partikel, Bornitrid - Partikel, und ein Lösungsmittel, wobei die Zusammensetzung weiterhin Polytetrafluorethylen und/oder Graphit umfasst. Die keramischen Partikel können eine mittlere oder maximale Korngröße kleiner 4 µm aufweisen und die Bornitrid - Partikel können eine mittlere oder maximale Korngröße kleiner 12 µm aufweisen. Außerdem betrifft die vorliegende Erfindung ein Verfahren zur Herstellung einer Beschichtung mit einer derartigen Zusammensetzung sowie eine entsprechend hergestellte Beschichtung und ein damit versehenes Bauteil.

## Beschreibung

### HINTERGRUND DER ERFINDUNG

### GEBIET DER ERFINDUNG

Die vorliegende Erfindung betrifft eine Zusammensetzung und ein Verfahren zur Herstellung einer Beschichtung für Bauteile einer Strömungsmaschine mit Anti - Eis - Eigenschaften sowie eine entsprechende Beschichtung und ein damit beschichtetes Bauteil einer Strömungsmaschine.

### STAND DER TECHNIK

Bei Strömungsmaschinen, wie stationären Gasturbinen oder Flugzeugtriebwerken, wird Umgebungsluft angesaugt, welche zusammen mit dem Brennstoff in der Brennkammer verbrannt wird, um als Verbrennungsgase ausgestoßen zu werden. Beim Ansaugen der Umgebungsluft gelangen auch Verunreinigungen, wie beispielsweise Sand, Rußpartikel, Salz und dergleichen, sowie Feuchtigkeit, die in der Luft enthalten sind, in die Strömungsmaschine und können dort zu Ablagerungen auf Triebwerksbauteilen führen, was zu einer Verschlechterung des Wirkungsgrads der Strömungsmaschine durch Veränderung der Oberflächenqualität der Bauteile der Strömungsmaschine durch die Ablagerungen führen kann. Insbesondere bei Flugzeugtriebwerken, die in unterschiedlichen Umgebungen betrieben werden, stellt die Ablagerung von Eis ein ernstzunehmendes Problem dar, welches auch für den sicheren Betrieb von Fluggerät relevant ist, da Eisablagerungen die Betriebseigenschaften von Bauteilen negativ beeinflussen können.

Um diesem Problem der Bildung von Ablagerungen von Eisschichten zu begegnen, wurde bereits versucht, die Oberflächen von Bauteilen mit Beschichtungen zu versehen bzw. die Oberflächen zu modifizieren. So sind beispielsweise in den Dokumenten EP 2 343 401 A1, EP 1 734 090 A2, EP 2 333 025 B1, US 2007/0254170 A1, EP 1 484 373 A1, EP 1 994 099 B1, US 7,910,683 B2, EP 2 298 840 A1, EP 2 426 179 A1, 2 343 400 A1, US 2003/0232941 A1 und DE 35 11 349 A1 Oberflächenmodifizierungen und Beschichtungen beschrieben, die einen Eisansatz an unterschiedlichen Bauteilen und teilweise auch an Bauteilen von Flugtriebwerken verhindern sollen.

Allerdings zeigen die bekannten Anti - Eis - Schichten entweder ungenügende Anti - Eis - Eigenschaften oder sind für die zu erwartenden bzw. angestrebten Umgebungsbedingungen in Strömungsmaschinen für einen dauerhaften und zuverlässigen Einsatz nicht geeignet. Darüber hinaus existiert das Problem, dass Schichten zur Vermeidung von Anhaftungen oft Cr(VI)-Verbindungen enthalten, die aufgrund ihrer gesundheitsgefährdenden Eigenschaften und den sich durch die hohen Sicherheitsanforderungen ergebenden Verarbeitungsschwierigkeiten nicht sinnvoll einsetzbar sind.

### OFFENBARUNG DER ERFINDUNG

### AUFGABE DER ERFINDUNG

Es ist deshalb Aufgabe der vorliegenden Erfindung, eine Beschichtung bereitzustellen, die für Bauteile von Strömungsmaschinen Anti - Eis - Eigenschaften bereitstellt. Dabei soll die entsprechende Beschichtung bei den Umgebungsbedingungen einer Strömungsmaschine zuverlässig einsetzbar sein und eine sichere und unaufwändige Herstellung, Verarbeitung und Anwendung ermöglichen.

### TECHNISCHE LÖSUNG

Diese Aufgabe wird gelöst durch eine Zusammensetzung für die Herstellung einer Beschichtung für Bauteile einer Strömungsmaschine mit Anti - Eis - Eigenschaften mit den Merkmalen des Anspruchs 1, ein Verfahren zur Herstellung einer derartigen Beschichtung mit den Merkmalen des Anspruchs 6, eine Beschichtung mit den Merkmalen des Anspruchs 9 und ein Bauteil einer Strömungsmaschine mit einer derartigen Beschichtung mit den Merkmalen des Anspruchs 13. Vorteilhafte Ausgestaltungen sind Gegenstand der abhängigen Ansprüche.

Die Erfindung schlägt zur Herstellung einer Beschichtung für Bauteile einer Strömungsmaschine mit Anti - Eis - Eigenschaften eine Zusammensetzung vor, die ein Bindemittel mit mindestens einem siliziumorganischen Bestandteil, keramische Partikel, Bornitrid-Partikel und mindestens ein Lösungsmittel umfasst, wobei die Zusammensetzung weiterhin Polytetrafluorethylen und/oder Graphit umfasst. Eine derartige Zusammensetzung ermöglicht die Herstellung einer Beschichtung mit guten Anti - Eis - Eigenschaften auf Komponenten eines Flugtriebwerks, insbesondere auf Schaufeln im Verdichter einer entsprechenden Strömungsmaschine.

Die keramischen Partikel der Zusammensetzung können eine mittlere oder maximale Korngröße kleiner 4 µm aufweisen und die Bornitrid - Partikel können eine mittlere oder maximale Korngröße kleiner 12 µm aufweisen. Durch die Verwendung entsprechender Partikel mit geringer Partikelgröße der eingesetzten keramischen Partikel und/oder Bornitrid-Partikel können die aerodynamischen Eigenschaften einer entsprechenden Beschichtung für Strömungsmaschinen erreicht werden. Insbesondere kann damit eine Beschichtung hergestellt werden, welche eine gemittelte Oberflächenrautiefe von ≤ 6 µm, insbesondere ≤ 2 µm aufweist. Durch die gemittelte Oberflächenrautiefe ≤ 6 µm bzw. ≤ 2 µm werden nicht nur die aerodynamischen Eigenschaften der Beschichtung und die der mit der Beschichtung versehenen Bauteile soweit verbessert, dass ein Einsatz in Strömungsmaschinen sinnvoll ist, sondern auch die Anti - Eis - Eigenschaften werden durch die Glättung der Oberfläche verbessert.

Die keramischen Partikel können ein oder mehrere Komponenten umfassen, wie beispielsweise Aluminiumoxid, Titanoxid, Siliziumoxid, Alumosilikat, Zirkonoxid, Feldspat, Zeolithe und Kaolin. Die oxidkeramischen Partikel, wie Aluminiumoxid, Titanoxid, Alumosilikat können hierbei Partikelgrößen im Bereich von > 0,2 µm und kleiner 4 µm aufweisen.

Bei der Angabe der entsprechenden Korngrößen bzw. Partikelgrößen wird immer Bezug genommen auf eine mittlere Korngröße bzw. eine maximale Korngröße der entsprechenden Fraktion, sofern nicht ausdrücklich etwas anderes angegeben.

Das Bindemittel der entsprechenden Zusammensetzung weist zumindest einen siliziumorganischen Bestandteil auf. Siliziumorganisch bedeutet hierbei, dass es sich um eine Kohlenstoffverbindung mit Siliziumanteilen handelt, welche beispielsweise durch Alkoxysilane und Polysiloxane gebildet sein kann. Das Bindemittel kann ein oder mehrere dieser siliziumorganischen Bestandteile und Kombinationen daraus umfassen.

Die Zusammensetzung kann weiterhin Prozessadditive umfassen. Unter Prozessadditiven sind Zusätze zu verstehen, die während des Verarbeitungsprozesses der Zusammensetzung bestimmte Eigenschaften verleihen, wie beispielsweise Dispergiermittel, Entschäumer, Verlaufsmittel, Verdicker etc.

Das Lösungsmittel der Zusammensetzung kann durch ein organisches Lösungsmittel, insbesondere Alkohol und/oder Wasser, gebildet sein.

Die Zusammensetzung kann einen Feststoffgehalt zwischen 10 Gew.% und 40 Gew.%, insbesondere 20 Gew.% bis 30 Gew.% aufweisen.

Das Bornitrid kann mit einem Anteil von 5 Gew.% bis 50 Gew.%, insbesondere 10 Gew.% bis 15 Gew.%, bezogen auf den Feststoffgehalt, enthalten sein, während die keramischen Partikel mit einem Anteil von 5 Gew.% bis 50 Gew.%, vorzugsweise 10 Gew.% bis 20 Gew.%, enthalten sein können.

Eine Zusammensetzung gemäß den obigen Angaben kann auf einem zu beschichtenden Bauteil einer Strömungsmaschine aufgebracht und anschließend getrocknet und ausgehärtet werden, um eine Anti - Eis - Beschichtung zu bilden. Die Aufbringung kann in jeder geeigneten Art und Weise erfolgen, beispielsweise durch Streichen, Spritzen, Sprühen oder Tauchen des Bauteils in die entsprechende Zusammensetzung.

Die Aushärtung kann durch Wärmebehandlung bei einer Temperatur zwischen 200°C und 350°C, insbesondere zwischen 250°C und 300°C für eine Zeitdauer von 10 Minuten bis 120 Minuten, insbesondere 15 Minuten bis 60 Minuten, erfolgen. Die Wärmebehandlung kann hierbei an Luft durchgeführt werden.

Nach einer Ausführungsform kann die Zusammensetzung in mehreren Teilschichten auf dem zu beschichtenden Bauteil aufgebracht werden, wobei vorangehende Teilschichten zunächst bei Raumtemperatur getrocknet und gehärtet werden, bevor eine nachfolgende Teilschicht in gleicher Weise aufgebracht und getrocknet wird. Die getrockneten Teilschichten können dann zusammen gehärtet werde. Allerdings ist auch eine Härtung einzelner Teilschicht jeweils nach ihrem Aufbringen denkbar.

Es können insgesamt so viele Teilschichten aufgebracht werden, dass die Schichtdicke der gebildeten Schicht im Bereich von 5 µm bis 30 µm, insbesondere 10 µm bis 20 µm, liegt.

Die fertig abgeschiedene Beschichtung weist eine Matrix aus einem Bindemittel auf, welches mindestens eine siliziumorganische Verbindung umfasst. In dieser Matrix sind keramische Partikel und Bornitridpartikel eingelagert, die in der Matrix homogen und gleichmäßig verteilt aufgenommen sind. Die keramischen Partikel können gemäß der oben angegeben Zusammensetzung eine mittlere oder maximale Korngröße kleiner 4 µm aufweisen und die Bornitridpartikel können eine mittlere oder maximale Korngröße kleiner 12 µm aufweisen.

Die siliziumorganischen Verbindungen sowie die keramischen Partikel, die in der Beschichtung zu finden sind, entsprechen den für die Zusammensetzung angegebenen Stoffen bzw. deren Produkten nach der Aushärtung, wie z.B. das Hydrolysat der siliziumorganischen Verbindung(en) so dass auf eine wiederholte Beschreibung verzichtet werden kann.

Eine entsprechende Beschichtung kann eine gemittelte Oberflächenrautiefe ≤ 6 µm, insbesondere ≤ 2 µm aufweisen. Die Oberflächenrautiefe R_{z} ist hierbei dadurch definiert, dass eine vorgegebene Messstrecke an der Oberfläche des Werkstücks in sieben gleich große Einzelmessstrecken eingeteilt wird, wobei in den Einzelmessstrecken das Profil vermessen wird und die Differenz aus maximalem und minimalem Wert bestimmt wird. Der maximale oder minimale Wert bezieht sich hierbei auf die maximale oder minimale Höhe bzw. Tiefe der Oberflächenschicht. Für fünf der oben angegebenen Teilstrecken wird der Mittelwert gebildet und die so gemittelte Rautiefe erhalten.

Nach einem vorteilhaften Ausführungsbeispiel kann die Beschichtung auf einer Verdichterschaufel eines Flugzeugtriebwerks angeordnet sein. Vorteilhaft ist hierbei, dass die Beschichtung einfach zu entfernen ist und somit bei Bedarf wieder neu aufgebracht werden kann.

### AUSFÜHRUNGSBEISPIEL

Nach einem Ausführungsbeispiel wird in einem abgedeckten 2000ml Becherglas 620g eines polyestermodifizierten Polysiloxans vorgelegt und mit 200g Butylactetat bei Raumtemperatur für 1h mit einem Dissolver im Abzug verrührt. Anschließend werden 60g eines submikronen Titandioxid (Firma Sachtleben) sowie 65g eines mikronen Aluminiumtitanats (Firma Alroko) und 80g Aluminiumoxid CT1200SG als Pulver zugegeben und für weitere 30 Minuten gerührt. Die Materialien können zuvor auch separat als Pulvermischung angesetzt werden.

Nach Reduktion der Drehzahl auf 200U/min werden 15g Graphit sowie 10g eines kommerziellen Verlaufsadditivs (BYK) hinzugegeben und für weitere 30 Minuten gerührt. Nach einem Glasabstrich, der klumpenfrei sein sollte, wird das Beschichtungsmaterial in eine SATA-HVLP Niederdrucksprühpistole gefüllt und bei 2bar auf das Bauteil aufgesprüht. Nach Ablüften bei Raumtemperatur für eine Stunde wird bei 250°C für eine Stunde eingebrannt. Nach Einbrand ergibt sich eine Schichtdicke von ca. 10µm.

Die fertige Beschichtung, die sich zumindest teilweise über die Verdichterschaufel erstreckt, weist aufgrund der feinen Keramikpartikel und Bornitridpartikel eine geringe gemittelte Rautiefe auf, die dem beschichteten Bauteil eine vorteilhafte Glätte verleiht, die sowohl die Anti - Eis - Eigenschaften verbessert als auch die aerodynamischen Erfordernisse einer Verdichterschaufel in einer Strömungsmaschine erfüllt.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die Offenbarung der vorliegenden Erfindung schließt sämtliche Kombinationen der vorgestellten Einzelmerkmale mit ein.

## Patentansprüche

1. Zusammensetzung zur Herstellung einer Beschichtung für Bauteile einer Strömungsmaschine mit Anti - Eis - Eigenschaften, wobei die Zusammensetzung umfasst:
ein Bindemittel, welches mindestens einen siliziumorganischen Bestandteil aufweist,
keramische Partikel,
Bornitrid - Partikel, und
ein Lösungsmittel,
**dadurch gekennzeichnet, dass**
die Zusammensetzung weiterhin Polytetrafluorethylen und/oder Graphit enthält.

2. Zusammensetzung nach Anspruch 1,
**dadurch gekennzeichnet, dass**
die keramischen Partikel eine mittlere oder maximale Korngröße kleiner oder gleich 4 µm und/oder die Bornitrid - Partikel eine mittlere oder maximale Korngröße kleiner oder gleich 12 µm aufweisen.

3. Zusammensetzung nach Anspruch 1 oder 2,
**dadurch gekennzeichnet, dass**
der siliziumorganische Bestandteil ausgewählt ist aus der Gruppe, die Alkoxysilane und Polysiloxane umfasst.

4. Zusammensetzung nach einem der vorhergehenden Ansprüche,
**dadurch gekennzeichnet, dass**
die keramischen Partikel ein oder mehrere Komponenten aus der Gruppe umfassen, die Aluminiumoxid, Titanoxid, Siliziumoxid, Zirkonoxid, Alumosilicat, Feldspat, Zeolithe und Kaolin umfasst.

5. Zusammensetzung nach einem der vorhergehenden Ansprüche,
**dadurch gekennzeichnet, dass**
die Zusammensetzung Prozessadditive umfasst.

6. Verfahren zur Herstellung einer Beschichtung für Bauteile einer Strömungsmaschine mit Anti - Eis - Eigenschaften unter Verwendung einer Zusammensetzung nach einem der vorhergehenden Ansprüche, bei welchem die Zusammensetzung auf dem Bauteil aufgebracht wird und anschließend ausgehärtet wird.

7. Verfahren nach Anspruch 6,
**dadurch gekennzeichnet, dass**
die Zusammensetzung durch eine Wärmebehandlung bei einer Temperatur zwischen 200°C und 350°C, insbesondere zwischen 250°C und 300°C für eine Zeitdauer von 10 min bis 120 min, insbesondere 15 min bis 60 min, ausgehärtet wird.

8. Verfahren nach einem der Ansprüche 6 oder 7,
**dadurch gekennzeichnet, dass**
die Zusammensetzung in mehreren Teilschichten aufgebracht wird, insbesondere eine erste Teilschicht mit der Zusammensetzung aufgebracht und getrocknet wird und nach der Trocknung der ersten Teilschicht eine zweite Teilschicht mit der Zusammensetzung aufgebracht und getrocknet wird und die gesamte Schicht ausgehärtet wird.

9. Beschichtung für Bauteile einer Strömungsmaschine mit Anti - Eis - Eigenschaften, insbesondere hergestellt mit einer Zusammensetzung nach einem der Ansprüche 1 bis 5 und/oder einem Verfahren nach einem der Ansprüche 6 bis 8, mit
einer Matrix aus einem Bindemittel, welches mindestens eine siliziumorganische Verbindung aufweist,
keramischen Partikeln und
Bornitrid - Partikeln, die in der Matrix homogen und gleichmäßig verteilt aufgenommen sind, **dadurch gekennzeichnet, dass**
die Beschichtung weiterhin Polytetrafluorethylen und/oder Graphit enthält.

10. Beschichtung nach Anspruch 9,
**dadurch gekennzeichnet, dass**
die keramischen Partikel eine mittlere oder maximale Korngröße kleiner oder gleich 4 µm und/oder die Bornitrid - Partikel eine mittlere oder maximale Korngröße kleiner oder gleich 12 µm aufweisen.

11. Beschichtung nach Anspruch 12,
**dadurch gekennzeichnet, dass**
die Beschichtung eine Dicke im Bereich von 5 µm bis 30 µm, insbesondere 10 µm bis 20 µm aufweist.

12. Beschichtung nach Anspruch 12 oder 13,
**dadurch gekennzeichnet, dass**
die Beschichtung eine gemittelte Oberflächenrautiefe von kleiner oder gleich 6 µm, insbesondere kleiner oder gleich 2 µm aufweist.

13. Bauteil einer Strömungsmaschine mit einer Beschichtung nach einem der Ansprüche 10 bis 12.

14. Bauteil nach Anspruch 14,
**dadurch gekennzeichnet, dass**
das Bauteil eine Verdichterschaufel ist.
